Europäisches Patentamt

European Patent Office

Office européen des brevets

(19)

(11) **EP 0 855 040 B1**

(12) **EUROPEAN PATENT SPECIFICATION**

(45) Date of publication and mention
of the grant of the patent:
**05.12.2001 Bulletin 2001/49**

(51) Int Cl.⁷: $G01S\ 3/808$, $G01S\ 5/20$, $G01S\ 11/14$

(21) Application number: **96933668.4**

(22) Date of filing: **23.09.1996**

(86) International application number:
**PCT/NO96/00226**

(87) International publication number:
**WO 97/14051 (17.04.1997 Gazette 1997/17)**

(54) **AUTOMATIC DETERMINATION OF SNIPER POSITION FROM A STATIONARY OR MOBILE PLATFORM**

AUTOMATISCHE BESTIMMUNG DER POSITION EINES HECKENSCHÜTZEN VON EINER STATIONÄREN ODER MOBILEN PLATTFORM AUS

DETERMINATION AUTOMATIQUE DE LA POSITION D'UN TIREUR ISOLE DEPUIS UNE PLATE-FORME FIXE OU MOBILE

(84) Designated Contracting States:
**DE FR GB**

(30) Priority: **26.09.1995  NO 953802**

(43) Date of publication of application:
**29.07.1998  Bulletin 1998/31**

(73) Proprietors:
• **Gustavsen, Arve**
  **3178 Vale (NO)**
• **Otterlei, Ragnvald**
  **3600 Kongsberg (NO)**
• **Endresen, Tore**
  **3189 Horten (NO)**

(72) Inventors:
• **Gustavsen, Arve**
  **3178 Vale (NO)**
• **Otterlei, Ragnvald**
  **3600 Kongsberg (NO)**
• **Endresen, Tore**
  **3189 Horten (NO)**

(74) Representative: **Joly, Jean-Jacques et al**
  **Cabinet Beau de Loménie**
  **158, rue de l'Université**
  **75340 Paris Cédex 07 (FR)**

(56) References cited:
EP-A- 0 684 485        WO-A-96/07109
GB-A- 2 290 380        US-A- 4 323 993
US-A- 5 241 518

**Description**

The present invention relates to an automatic method of passive determination of sniper positions randomly located in the surroundings, utilising a simple stationary or mobile listening station, consisting of an intelligent listening system including two or more microphones together with a compass supporting the solution.
Such a method of surveillance of shooting activity is utmost important during unsafe conditions when snipers are especially active, as it may be during UN operations, and the importance of identifying the position of any shoot is vital. The method is meant for stationary as well for mobile activities.
The following shows areas for which a stationary solution can be useful.

Airports
Official buildings
Military facilities
Private buildings, VIP's in governmental administration
Unsafe areas

The method can be utilised for mobile activities as follows:

Hand held in the battle field
Mounted on a car when driving in unsafe areas

Equipment that is utilising the present invention can be located to areas with shooting activities, mounted on a car that is moved into the area. Remote monitoring by radio satisfies safe monitoring of the situation when gunfire is registered.
Various methods for the detection and positioning of sound sources have been patented, and these are as follows:

GB-3.336.245, GB-2.062.864, GB-2.099.995. US-3.838.593 and US-3.626.750, GB-1.349.120, NO-1.39.240, GB-1.174.048, GB-342.800, GB-1.452.788, GB-2.167.556, US-4.372.151, US-4.543.817, WO 82/00718. NO 169678, GB-A.2.181.238, US 4.333.170, EP-A.64.477, GB-A.2.191.580, US-5.070.484 and US-5.099.455

A majority of these patents deals with leakage in pipes, and expects that the sound moves through solid material. Thereby they are distinctly deviating from the present invention.
Most methods are oriented towards leakage problems in situations where the positioning can be achieved along one line (one dimensional).
EP-A.64.477, GB-A.2.181.238 and NO 169678 on the other hand, are utilised to detect, determine the direction to and the position of acoustic sound through air, all utilising more than one microphone cluster for such positioning, and have several microphones in each cluster for that purpose.
EP-A.64.477 and GB-A.2.181.238 are related to weapons and gunfire.
Most of these methods are using several intercepting directional vectors, with base in several microphones clusters in order to determine the position of sound origin.
GB-A.2.191.580 is using an array of distributed microphones to determine the position of weapons by sound.
The present invention relates to the determination of the position of weapons, utilising one cluster only with 2 or more microphones.
The position calculations are made for weapons with projectiles that creates shock waves along the projectile trajectory. These shock waves are used together with the shot sound to determine the position of the weapon that fired the projectile. Both sound impressions have impulse features that makes it possible to distinguish the sound pattern from other existing sound.
None of the above mentioned methods are using such a principle for the positioning of a weapon.
The present invention is significantly different from the above mentioned methods. There are no known means for such automatic determination of sniper position, based upon a stationary or mobile listening station, requiring a compass for vehicle angular and speed corrections to the calculations considering also a variable projectile speed in the position calculations.
The present invention is providing a tool for minimising the equipment for determination of sniper positions, facilitating a method for one person to achieve such determination without the need for any co-ordination with other persons or with an other mobile and fixed mounted listening equipment.
The present invention provides a method for the determination of position of one or more active weapons when the projectiles from these weapons creates a shock waves along their trajectories. A listening station with 2 or more microphones in a cluster is required for the implementation of the method. These microphones picks up signals from all available acoustics within the frequency domain of the microphones for acoustic monitoring in the sound measuring system of the listening station. The sound measuring system measures, calculates and do the analysis of any existing environmental sound, received from the microphones. Amplitude/phase/frequency-data for each microphone is calculated along with a complete and continuos evaluation of the sound impulses received.

A shock wave from a projectile has no pre warning. This sound is distinctly different from the shot sound as well as any other environmental sound. The direction to the shock wave is determined by a relative phase measurement, eventually also together with time measurement. A 2 or 3 dimensional vector can be calculated, depending only upon the number of microphones involved. A corresponding determination of the direction to the weapon is made when the shot sound reaches the sensor. The projectile follows a trajectory when it leaves the weapon, and this trajectory identifies one side of a triangle in which the two calculated velocity vectors represents the remaining two sides of the triangle. The position of the weapon can be determined along the directional vector with base in the position of the cluster, taking into consideration the speed of the projectile and the time utilised between the two corners of the triangle.

The method is general by nature, and do not require any knowledge about the surroundings.

This is achieved as the methods described in the following claims.

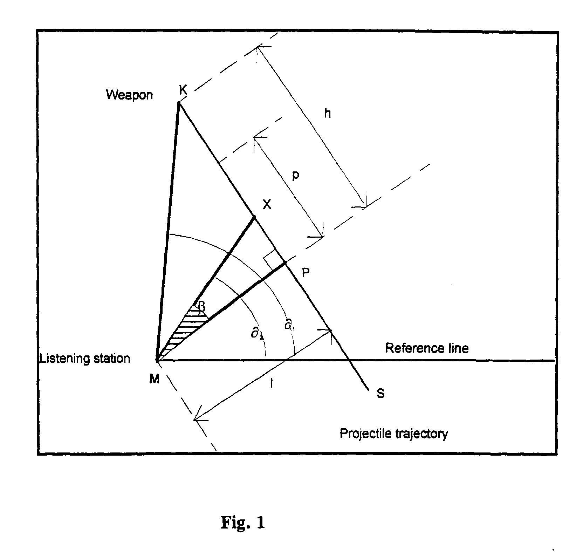

The method makes it possible to estimate the position of a sniper when the sniper is positioned at a point K and shoots towards point S as shown in Fig. 1. The line (trajectory) K-S has a minimum distance I from the cluster M. The point P at the trajectory K-S has a minimum distance from the sensor. Point X is the so called "bang generation point".

The following is one example on possible ways of calculating the sniper position:

The speed of the projectile is known as:

$$1. \qquad v = v(t)$$

The distance from the projectile to the closest point P on the trajectory K-S at time t is given by:

$$2. \qquad p = h - \int_{0}^{t} v(s) \bullet ds$$

See Fig. 1.

The sound generated by the projectile in a position $p$ reaches the sensor after a time $\tau$, calculated from the point in time when the shot was fired.

$$3. \qquad \tau = t + \frac{\sqrt{l^{2} + (h - \int_{0}^{t} v(s) \bullet ds)^{2}}}{c}$$

The shock wave reaches the sensor at a time given by the minimum of the above function. A corresponding value for t is $t_{min}$. This value is found by solving the following equation:

$$4. \qquad \left( h - \int_{0}^{t_{min}} v(s) \bullet ds \right) = \frac{l}{\sqrt{\left( \frac{v(t_{min})}{c} \right)^{2} - 1}}$$

This leads to the equation:

$$5. \qquad \tau_{min} = t_{min} + \frac{\sqrt{l^2 + \left(h - \int_0^{t_{min}} v(s) \bullet ds\right)^2}}{c}$$

At time $t_{min.}$, the projectile was in the position X on the trajectory K-S. The position X is identified on the said trajectory at a distance given by the angle $\beta$ in relation to perpendicular from the sensor to the trajectory.

The angle $\beta$ is defined as follows:

$$6. \qquad \tan(\beta) = \frac{1}{\sqrt{\left(\frac{v(t_{min})}{c}\right)^2 - 1}}$$

This gives further as follows:

$$7. \qquad \sin(\beta) = \frac{v(t_{min})}{c}$$

The listening station is recording the shot sound from the weapon as well as the shock wave from the projectile when passing. With the basis in a reference line as shown in Fig. 1, the angles to the two sound impressions are measured as correspondingly angle $\partial_1$ and angle $\partial_2$ relative to the reference line.

The distance h is thereafter calculated as the distance between the position K and P.

$$8. \qquad h = l \bullet \tan(\partial_1 - \partial_2 + \beta)$$

The shot sound reaches the sensor at a time $\tau_0$ :

$$9. \qquad \tau_0 = \frac{\sqrt{h^2 + l^2}}{c}$$

An it follows that:

$$10. \qquad \Delta\tau = \tau_0 - \tau_{min}$$

By means of the above equations, $h$ and $l$ can be determined numerically, and principally this is made by finding the solutions of the following equations:

$$11. \qquad \partial_1 - \partial_2 = \arctan\left(\frac{h}{l}\right) - \beta(h,l) + \sigma_1$$

$$12. \qquad \Delta\tau = \frac{\sqrt{h^2 + l^2}}{c} - \tau_{min}(h,l) + \sigma_2$$

The method gives an accuracy estimate for the distance h and 1, while $\sigma_1$ and $\sigma_2$ represents the measuring error for the measurements $\partial_1 - \partial_2$ and $\Delta\tau$.

The position calculations can be made when the listening station is stationary, or is transported with a person or mounted on a moving vehicle. A compass is utilised in order to compensate for north corrections in the angular calculations.

A feature of the present invention is that counter mechanisms enables the calculation of shots, starting at any time. Such a calculation can be made for all weapons for whom positions are calculated as well as for those that have no shock wave related. The listening station is equipped with a compass, utilised to correct the north orientation of any angular calculation.

Another feature of the present invention is that the listening station can be connected to a presentation unit, thereby providing the operator with available data for the various weapons being active in the area.

A central feature of the invention is that the operator can have presented to him the position of the firing weapons, and the time for such firing.

Another feature of the present invention is that the listening station includes automatic and continuos calibration of microphone characteristics. This is achieved by locating one or more sound generates in known positions within the reach of the listening station. This is a quality assurance for the detection and angular capabilities.

Another feature of the present invention is that the listening station is self sufficient regarding power, thereby simplifying transportation and installation in an emergency.

A feature of the present invention is that the listening station can be connected to a separate alarm & warning system, reached by radio or telephone.

## Claims

1. A method for the passive automatic determination of the position of one or more sniper weapons in active use from one or more geographical positions, by utilizing a stationary or mobile listening station consisting of an intelligent sound measuring system attached to a set of two or more microphones and a compass, said weapons utilising projectiles that create characteristic shock waves, a projectile from such a weapon establishing a characteristic shot sound when the projectile leaves the weapon, **characterised in that** the listening station measures the sound signals from the use of sniper weapons within line of site and the reach of the listening system through air, that the microphones have well defined inter distances, that the listening station is located within the target area of the sniper weapon, that the microphone signal is continuously treated in the time domain, in the frequency domain or in a combination thereof, and that the time for the shock wave arrival and the shot sound arrival are both detected by their characteristics, that the time difference between the shock wave and the shot sound is calculated, that the direction to the characteristic shock wave is calculated, utilising phase measurement, time-/ amplitude measurements and cross correlation of signals independently or in combinations, that the direction to the characteristic shot sound is calculated, utilising phase measurement, time-/amplitude measurements and cross correlation of signals independently or in combinations, that the direction to the shock wave and the shot sound is north adjusted by means of a compass, that the speed of the projectile is measured or obtained, and said speed, said time difference, said direction to the weapon and said direction to the shock wave are utilised to determine the position of the sniper weapon, measured along the north adjusted direction to the weapon from the listcning station.

2. A method according to claim 1, **characterised in that** the listening system counts and registers the number of detected shots for one or more directions and positions.

3. A method according to claim 1, **characterised in that** the listening system is connected to a display for the presentation of weapon characteristics.

4. A method according to claim 1, **characterised in that** the listening system can provide the operator with the direction to and the position from where shots are made, and the time for each shooting.

5. A method according to claim 1, **characterised in that** one or more sound generators are located in known positions for the automatic calibration of the characteristics of the microphones in the listening station.

6. A method according to claim 1, **characterised in that** the listening station can easily be relocated, due to self sufficiency in power and other supplies.

7. A method according to claim 1, **characterised in that** the listening station can be connected to an alarm and warning function.

8. A method according to claim 1, **characterised in that** the listening system can be connected to a communication unit for the transmission of weapon characteristics.

**Patentansprüche**

1. Verfahren zur passiven automatischen Bestimmung der Position einer oder mehrerer aktiv von einer oder mehreren geographischen Positionen benutzter Heckenschützen-Waffen, unter Verwendung einer stationären oder mobilen Horchstation mit einer intelligenten einer Zusammenstellung aus zwei oder mehr Mikrophonen zugeordneten Geräuschmeßvorrichtung und eines Kompaß, wobei die Waffen Geschosse verwenden, die charakteristische Druckwellen erzeugen und ein Geschoß aus einer solchen Waffe ein charakteristisches Schußgeräusch erzeugt, wenn das geschoß die Waffe verläßt,
   **dadurch gekennzeichnet,**
   **daß** die Horchstation die Geräuschsignale aus dem Gebrauch der Heckenschützen-Waffen innerhalb der Geländelinie und der Reichweite des Horchsystems in der Luft mißt, daß die Mikrophone wohldefinierte Abstände zueinander haben, daß die Horchstation innerhalb des Zielgebietes der Heckenschützen-Waffe angeordnet ist, daß das Mikrophonsignal ständig innerhalb der Zeitdomaine, der Frequenzdomaine, oder einer Kombination hiervon verarbeitet wird und daß die Ankunftszeiten der Druckwelle als auch des Schußgeräusches mit ihren Merkmalen erfaßt werden, daß die Zeitdifferenz zwischen der Druckwelle und dem Schußgeräusch berechnet wird, daß die Richtung zu der charakteristischen Druckwelle unter Verwendung von Phasenmessung, von Zeit-/Amplitudenmessung und von Kreuzkorrelation von Signalen unabhängig oder in Kombination berechnet wird, daß die Richtung zu dem charakteristischen Schußgeräusch unter Verwendung von Phasenmessung, von Zeit/Amplitudenmessung und von Kreuzkorrelation von Signalen unabhängig oder in Kombination berechnet wird, daß die Richtung zu der Druckwelle und dem Schußgeräusch gegenüber Nord ausgeglichen wird mittels eines Kompasses, daß die Geschwindigkeit der Geschosse gemessen oder erhalten wird und daß die Geschwindigkeit, die Zeitdifferenz, die Richtung zu der Waffe und die Richtung zu der Druckwelle benutzt werden, die Position der Heckenschützen-Waffe zu bestimmen, gemessen von gegenüber Nord ausgeglichener Richtung zu der Waffe von der Horchstation aus.

2. Verfahren nach Anspruch 1,
   **dadurch gekennzeichnet,**
   **daß** das Horchsystem die Anzahl der für eine oder mehrere Richtungen und Positionen erfaßten Schüsse zählt und registriert

3. Verfahren nach Anspruch 1,
   **dadurch gekennzeichnet,**
   **daß** das Horchsystem mit einer Anzeigevorrichtung verbunden ist zur Darstellung der Waffencharakteristiken.

4. Verfahren nach Anspruch 1,
   **dadurch gekennzeichnet,**
   **daß** das Horchsystem den Bediener über die Richtung zu und die Position von der Schüsse erfolgen, und über die Zeit jedes Schusses informiert.

5. Verfahren nach Anspruch 1,
   **dadurch gekennzeichnet,**
   **daß** einer oder mehrere Geräuscherzeuger in bekannten Positionen angeordnet sind für die automatische Kalibrierung der Mikrophoncharakteristika in der Horchstation.

6. Verfahren nach Anspruch 1,
   **dadurch gekennzeichnet,**
   **daß** die Horchstation leicht verlegt werden kann, wegen Sparsamkeit im Energieverbrauch und sonstiger Versorgung.

7. Verfahren nach Anspruch 1,
   **dadurch gekennzeichnet,**
   **daß** die Horchstation mit einer Alarm- und Warnfunktion verbunden werden kann.

8. Verfahren nach Anspruch 1,

**dadurch gekennzeichnet,**
**daß** das Horchsystem mit einer Kommunikationsvorrichtung zur Übertragung der Waffencharakteristika verbunden werden kann.

## Revendications

1. Procédé destiné à la détermination automatique passive de la position d'une ou plusieurs armes de tireurs isolés en utilisation active à partir d'une ou plusieurs positions géographiques, en utilisant un poste d'écoute immobile ou mobile constitué d'un système de mesure de son intelligent rattaché à un ensemble de deux ou plusieurs microphones et un compas, lesdites armes utilisant des projectiles qui créent des ondes de chocs caractéristiques, un projectile provenant d'une telle arme établissant un son de tir caractéristique lorsque le projectile quitte l'arme, **caractérisé en ce que** le poste d'écoute mesure les signaux sonores provenant de l'utilisation des armes des tireurs isolés sur la ligne de site et dans la portée du système d'écoute dans l'air, **en ce que** les microphones présentent des distances mutuelles bien définies, **en ce que** le poste d'écoute est localisé à l'intérieur de la zone cible de l'arme du tireur isolé, **en ce que** le signal du microphone est traité en permanence dans le domaine du temps, dans le domaine des fréquences ou dans une combinaison de ceux-ci, et **en ce que** le temps pour l'arrivée de l'onde de choc et l'arrivée du son du tir sont tous deux détectés par leurs caractéristiques, **en ce que** la différence de temps entre l'onde de choc et le son du tir est calculée, **en ce que** la direction vers l'onde de choc caractéristique est calculée, en utilisant une mesure de phase, des mesures de temps/amplitude et une corrélation croisée des signaux indépendamment ou en combinaison, **en ce que** la direction jusqu'au son du tir caractéristique est calculée, en utilisant une mesure de phase, des mesures de temps/amplitude, et une corrélation croisée des signaux indépendamment ou en combinaison, **en ce que** la direction jusqu'à l'onde de choc et le son du tir est ajustée par rapport au nord au moyen d'un compas, **en ce que** la vitesse du projectile est mesurée ou obtenue, et **en ce que** ladite vitesse, ladite différence de temps, ladite direction jusqu'à l'arme et ladite direction jusqu'à l'onde de choc sont utilisées pour déterminer la position de l'arme du tireur isolé, mesurée en même temps que la direction ajustée par rapport au nord, de l'arme par rapport au poste d'écoute.

2. Procédé selon la revendication 1, **caractérisé en ce que** le système d'écoute compte et enregistre le nombre des tirs détectés pour une ou plusieurs directions et positions.

3. Procédé selon la revendication 1, **caractérisé en ce que** le système d'écoute est relié à un dispositif d'affichage en vue de la présentation des caractéristiques de l'arme.

4. Procédé selon la revendication 1, **caractérisé en ce que** le système d'écoute permet de fournir à l'opérateur la direction vers laquelle et la position à partir de laquelle les tirs sont effectués, et le temps pour chaque tir.

5. Procédé selon la revendication 1, **caractérisé en ce qu'**un ou plusieurs générateurs de sons sont situés à des positions connues pour la calibration automatique des caractéristiques des microphones dans le poste d'écoute.

6. Procédé selon la revendication 1, **caractérisé en ce que** le poste d'écoute peut aisément être relocalisé, en raison d'une autonomie d'alimentation et autres fournitures.

7. Procédé selon la revendication 1, **caractérisé en ce que** le poste d'écoute peut être relié à une fonction d'alarme et d'avertissement.

8. Procédé selon la revendication 1, **caractérisé en ce que** le poste d'écoute peut être relié à une unité de communications en vue de la transmission des caractéristiques de l'arme.

Fig. 1